# EUROPEAN PATENT SPECIFICATION

(11) **EP 3 310 111 B1**
(45) Date of publication and mention of the grant of the patent: **08.12.2021**
(21) Application number: 15898009.4
(22) Date of filing: 15.07.2015
(51) Int. Cl.: H04W 72/12, H04W 72/04

(54) **FIXED SCHEDULING METHOD AND DEVICE, AND USER EQUIPMENT AND BASE STATION**
VERFAHREN UND VORRICHTUNG ZUR FESTEN ZEITPLANUNG SOWIE BENUTZERGERÄT UND BASISSTATION
PROCÉDÉ ET DISPOSITIF DE PLANIFICATION FIXE, ET ÉQUIPEMENT UTILISATEUR ET STATION DE BASE

(43) Date of publication of application: 18.04.2018
(73) Proprietor: Huawei Technologies Co., Ltd., Longgang District Shenzhen, Guangdong 518129 (CN)
(72) Inventor: ZHENG, Xiaoxiao, Shenzhen Guangdong 518129 (CN); XU, Xiaoying, Shenzhen Guangdong 518129 (CN); PANG, Lingli, Shenzhen Guangdong 518129 (CN)
(74) Representative: Gill Jennings & Every LLP
(86) International application number: PCT/CN2015/084117
(87) International publication number: WO 2017/008281

(56) References cited:
- EP-A1- 1 903 705
- WO-A1-2008/111785
- WO-A1-2012/150883
- CN-A- 101 568 181
- CN-A- 101 854 639
- CN-A- 101 990 043
- CN-A- 102 595 596
- CN-A- 103 687 039
- US-A1- 2011 038 334
- US-A1- 2012 113 942
- US-A1- 2015 195 850

## Description

### TECHNICAL FIELD

The present application relates to the field of wireless communications, and in particular, to a fixed scheduling user equipment, and a base station

### BACKGROUND

In a Long Term Evolution (LTE) system, there are mainly two manners of scheduling radio resources: semi-persistent scheduling (SPS) and flexible scheduling. In the semi-persistent scheduling, a base station pre-configures a scheduling period by means of radio resource control (RRC). User equipment (UE) sends or receives data within each scheduling period by using a radio resource that is indicated by using scheduling signaling on a physical downlink control channel (PDCCH) or an enhanced physical downlink control channel (ePDCCH). In the flexible scheduling, a radio resource used for transmission in each subframe between UE and a base station is separately specified by using scheduling signaling by means of RRC. Compared with the flexible scheduling, the semi-persistent scheduling is used to reduce a quantity of scheduling signaling and radio resource overheads caused by scheduling signaling.

However, the semi-persistent scheduling is suitable to be used mainly in a delay-insensitive network. For example, in a Voice Over IP (VoIP) network, a transmission interval of a data packet of a service between UE and a base station and a size of the data packet are relatively fixed. Therefore, the semi-persistent scheduling may be used to allocate a radio resource to the UE. However, in a delay-insensitive network, because a service is highly sensitive to a delay, to meet a delay requirement of the service, a scheduling period of the semi-persistent scheduling needs to be shortened when the semi-persistent scheduling is used. However, when the scheduling period is shortened, the UE occupies more radio resources as a result. In an extreme case, a segment of radio resources needs to be completely reserved for the UE.

Service data in the short-delay network is discontinuous in most cases, that is, the UE does not send data at all times. Therefore, in the short-delay network, although the existing semi-persistent scheduling can reduce a quantity of scheduling signaling and radio resource overheads caused by scheduling signaling, radio resources are wasted.

WO 2012/150883 relates to methods and arrangements for adapting random access allocation of resources to user equipment. WO2008111785 relates to radio resource allocation and data transmission in packet based mobile communication system. US20150195850 relates to scheduling method, base station, user equipment, and system. EP1903705 relates to radio resource assigning method and communication apparatus. US20120113942 relates to uplink receiving method for a base station and uplink transmitting method for a terminal using a shared wireless resource. CN102595596 relates to CSI transmission method and apparatuses.

### SUMMARY

Multiple aspects of the present application provide user equipment and a base station to reduce signaling overheads and reduce a waste of radio resources.

The invention has been defined in the independent claims. Further specific technical features have been defined in the dependent claims.

### BRIEF DESCRIPTION OF DRAWINGS

FIG. 1 is a schematic flowchart of an aspect of a fixed scheduling method according to the present application;
FIG. 2 is a schematic flowchart of another aspect of a fixed scheduling method according to the present application;
FIG. 3 is a schematic flowchart of another aspect of a fixed scheduling method according to the present application;
FIG. 4 is a schematic flowchart of another aspect of a fixed scheduling method according to the present application;
FIG. 5 is a schematic flowchart of another aspect of a fixed scheduling method according to the present application;
FIG. 6 is a schematic flowchart of another aspect of a fixed scheduling method according to the present application;
FIG. 7 is a schematic flowchart of another aspect of a fixed scheduling method according to the present application;
FIG. 8 is a schematic flowchart of another aspect of a fixed scheduling method according to the present application;
FIG. 9 is a schematic structural diagram of an aspect of a fixed scheduling apparatus according to the present application;
FIG. 10 is a schematic structural diagram of another aspect of a fixed scheduling apparatus according to the present application;
FIG. 11 is a schematic structural diagram of an aspect of UE according to the present application; and
FIG. 12 is a schematic structural diagram of an aspect of a base station according to the present application.

### DESCRIPTION OF ASPECTS

To make the objectives, technical solutions, and advantages of this invention clearer, the following further describes various aspects in detail with reference to the accompanying drawings. The aspects described below are not all claimed, they are included to help understanding the context of the invention. While the description refers to various aspects, the embodiments of the invention are those which comprise at least all the features of an independent claim. Any aspect which does not fall within the scope of the claims does not form part of the invention, but rather included as an illustrative example that is useful for understanding the invention.

It should be noted herein that in the aspects of the present application, each transmission interval may include only one subframe, or may include several consecutive subframes, for example, one frame, or may be set according to a requirement.

It should be further noted herein that a base station in the aspects of the present application includes, but is not limited to, an evolved NodeB (eNodeB) and a radio network controller (RNC).

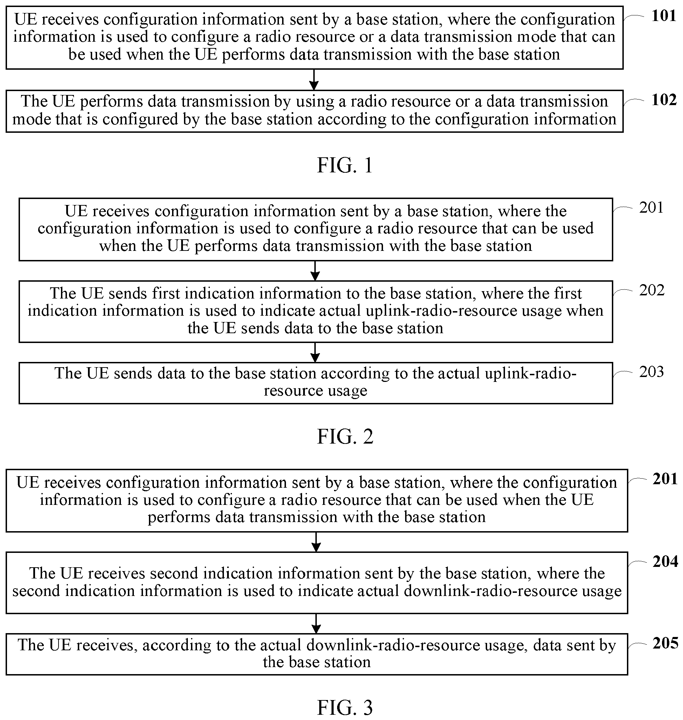

Referring to FIG. 1, FIG. 1 is a schematic flowchart of an aspect of a fixed scheduling method according to the present application. The scheduling method may be performed by UE.

Step 101. The UE receives configuration information from a base station, where the configuration information is used to configure a radio resource or a data transmission mode that can be used when the UE performs data transmission with the base station.

The data transmission mode may be a fixed scheduling and transmission mode. The radio resource may be a time domain resource or a frequency domain resource used for data transmission using a fixed scheduling and transmission mode.

When the configuration information is used to configure a data transmission mode that can be used when the UE performs data transmission with the base station, the configuration information may further be used to configure a period for data transmission using the fixed scheduling and transmission mode. Alternatively, when the configuration information is used to configure a radio resource that can be used when the UE performs data transmission with the base station, the configuration information may further be used to configure a service period of the radio resource.

When the configuration information is used to configure a radio resource that can be used when the UE performs data transmission with the base station, the configuration information may be used to configure at least one radio resource combination that can be used when the UE performs data transmission with the base station. The radio resource combination means a combination of a radio resource and a modulation and coding scheme that corresponds to data transmitted by using the radio resource.

Step 102. The UE performs data transmission by using a radio resource or a data transmission mode that is configured by the base station according to the configuration information.

According to different data transmission requirements, the UE uses different manners when performing data transmission by using the radio resource or the data transmission mode that is configured by the base station according to the configuration information.

When the configuration information is used to configure at least one radio resource combination that can be used when the UE performs data transmission with the base station, the UE may perform data transmission with the base station by using a selected radio resource combination. The selected radio resource combination is one of the at least one radio resource combination that can be used, and is selected according to a preset rule by the UE from the at least one radio resource combination that can be used. When selecting a radio resource combination, the UE may randomly select a radio resource combination that can be used, to perform data transmission. Alternatively, when different radio resource combinations correspond to different data transmission capabilities, the UE may select a radio resource combination that can meet a data transmission requirement, to perform data transmission. Alternatively, when different radio resource combinations correspond to different locations of the UE, the UE may select a radio resource combination according to a location of the UE. For example, the UE may select, according to a path loss or a power headroom report (PHR), a radio resource that can be used.

When the configuration information is used to configure a radio resource that can be used when the UE performs data transmission with the base station, or the UE has selected a radio resource combination that can be used, to perform data transmission with the base station, the UE may send first indication information to the base station, where the first indication information is used to indicate actual uplink-radio-resource usage when the UE sends data to the base station; and then send data to the base station according to the actual uplink-radio-resource usage. The actual uplink-radio-resource usage may include: a period within which the UE is to send data, or a period within which the UE is not to send uplink data, or the like.

Further, the UE may further receive second indication information from the base station, and then receive, according to an actual downlink-radio-resource usage, data from the base station. The actual downlink-radio-resource usage is determined by the UE according to the second indication information. The UE may report the actual uplink-radio-resource usage by using the first indication information, and learn the actual downlink-radio-resource usage by using the second indication information. In this way, signaling resources can be saved, and a waste of radio resources can be avoided. The actual downlink-radio-resource usage may include: a period within which the base station is to send downlink data, or a period within which the base station is not to send downlink data, or the like.

When the configuration information is used to configure a data transmission mode that can be used when the UE performs data transmission with the base station, the UE may perform data transmission according to a radio resource combination that is subsequently scheduled by the base station by using a physical channel. The physical channel may be a PDCCH or the like.

For example, the base station may first configure a fixed scheduling and transmission mode for the UE by using the configuration information, and may further configure a period and an effective time of the fixed scheduling and transmission mode when configuring the fixed scheduling and transmission mode. Then the base station may further schedule, by using the PDCCH, a radio resource combination that can be used when the UE performs data transmission with the base station by using the fixed scheduling and transmission mode. The radio resource combination may include a time-frequency resource and a corresponding modulation and coding scheme.

There may be multiple radio bearers between the UE and the base station, and different radio bearers have different uplink or downlink data transmission requirements. Therefore, when there are multiple radio bearers between the UE and the base station, the UE may select at least one specified bearer from the radio bearers, and then perform data transmission on the specified bearer by using the radio resource or the data transmission mode that is configured by the base station according to the configuration information. When there are multiple specified bearers, different radio resources or data transmission modes may be configured for different specified bearers.

In this aspect, UE receives configuration information from a base station, and the UE performs data transmission by using a radio resource or a data transmission mode that is configured by the base station according to the configuration information. Compared with an existing scheduling manner, the fixed scheduling method provided in this aspect can reduce scheduling signaling and avoid a waste of radio resources.

The following further describes a fixed scheduling method of the present application.

Referring to FIG. 2, FIG. 2 is a schematic flowchart of an aspect of a fixed scheduling method according to the present application. The scheduling method may be performed by UE.

Step 201. The UE receives configuration information from a base station, where the configuration information is used to configure a radio resource that can be used when the UE performs data transmission with the base station.

For content included in the configuration information and a function of the configuration information, refer to the foregoing aspect. Details are not described herein again.

Step 202. The UE sends first indication information to the base station, where the first indication information is used to indicate actual uplink-radio-resource usage when the UE sends data to the base station.

The UE first determines, according to to-be-sent uplink data, actual uplink-radio-resource usage when the UE sends data to the base station, and then sends first indication information to the base station, so that the base station can determine the actual uplink-radio-resource usage according to a sending time of the first indication information or content of the first indication information.

Actual radio-resource usage means whether the UE has data to be transmitted within a next transmission interval, within next N transmission intervals, or within an (N+M)th transmission interval, and which radio resource combination is to be used by the UE within the foregoing transmission interval to perform data transmission, and the like. Values of N and M are positive integers.

According to different actual situations, the UE sends first indication information to the base station in multiple manners.

The UE may send the first indication information to the base station once every N transmission intervals, to indicate whether there is uplink data to be transmitted within subsequent N transmission intervals. Alternatively, to further reduce radio resources consumed for sending the first indication information, the UE may send, according to a preset rule, the first indication information to the base station only when the actual radio-resource usage changes. A value of N may be determined according to a requirement, and usually may be a positive integer greater than 1.

If there is uplink data to be sent within a current transmission interval while there is no uplink data to be sent within a subsequent transmission interval, the UE may send the first indication information. If there is uplink data to be sent within a current transmission interval and there is still uplink data to be sent within a subsequent transmission interval, the UE may not send the first indication information.

Similarly, if there is no uplink data to be sent within a current transmission interval while there is uplink data to be sent within a subsequent transmission interval, the UE may send the first indication information. If there is no uplink data to be sent within a current transmission interval and there is still no uplink data to be sent within a subsequent transmission interval, the UE may not send the first indication information.

The first indication information may be in various forms, and there may be various corresponding sending manners.

The first indication information may be from the UE to the base station by using a physical control channel. For example, the first indication information may be a scheduling request (SR). The first indication information may be in a same format as an existing SR. Alternatively, the first indication information may be configured by using a higher layer at a specific subcarrier and a symbol location in a current subframe.

When there is data transmitted between the UE and the base station within the current transmission interval, the UE may send, during uplink data transmission, a MAC data packet that includes the first indication information to the base station. For example, a separately defined and specific MAC control element, one or more specified bits in a specific sub-header, or a specific LCID may be used as the first indication information.

A length of the first indication information is at least one bit. When the first indication information includes only one bit, it may be stipulated in advance that if a value of the bit is 0, it indicates that the UE has data to be sent within next N transmission intervals. If the value of the bit is 1, it indicates that the UE has no data to be sent within next N transmission intervals. Alternatively, it may be stipulated that if the bit exists, it indicates that there is data to be sent within next N transmission intervals. If the bit does not exist, it indicates that there is no data to be sent within next N transmission intervals. According to different stipulations that are made in advance, meanings indicated by 0 and 1 may be interchanged, and a meaning indicated when the bit exists and a meaning indicated when the bit does not exist may be interchanged.

When the first indication information includes only one bit, it may be stipulated that if a value of the bit is 0, it indicates that actual radio-resource usage of the UE within next N transmission intervals is the same as actual radio-resource usage within the current transmission interval. If the value of the bit is 1, it indicates that actual radio-resource usage of the UE within next N transmission intervals is different from actual radio-resource usage within the current transmission interval. Alternatively, it may be stipulated that if the bit exists, it indicates that actual radio-resource usage within a next transmission interval is the same as actual radio-resource usage within the current transmission interval. If the bit does not exist, it indicates that actual radio-resource usage within a next transmission interval is different from actual radio-resource usage within the current transmission interval. According to different stipulations that are made in advance, meanings indicated by 0 and 1 may be interchanged, and a meaning indicated when the bit exists and a meaning indicated when the bit does not exist may be interchanged.

When the first indication information includes M bits, one bit may be used to indicate whether there is data to be sent within next N transmission intervals, and the remaining M-1 bits may be used to separately indicate whether there is or there is no data to be sent within M-1 subsequent transmission intervals. Alternatively, the remaining M-1 bits may be used to indicate whether there is or there is no data to be sent within a subsequent (M―1)th transmission interval.

Alternatively, when the first indication information includes M bits, one or more bits may be used to indicate a radio resource combination to be used when the UE has data to be sent.

For example, it may be stipulated in advance that when the value of the bit in the sub-header is 1, it indicates that there is downlink data to be transmitted within a specified transmission interval. When the value of the bit in the sub-header is 0, it indicates that there is no data to be transmitted within the specified transmission interval. Alternatively, it may be stipulated in advance that when the value of the bit in the sub-header is 1, it indicates that a data transmission status within a specified transmission interval is the same as a data transmission status within the current transmission interval, that is, there is or there is no data to be transmitted within both the transmission intervals. When the value of the bit in the specific sub-header is 0, it indicates that a data transmission status within the specified transmission interval is different from a data transmission status within the current transmission interval. That is, if there is no data to be transmitted within the current transmission interval, there is data to be transmitted within the specified transmission interval. If there is data to be transmitted within the current transmission interval, there is no data to be transmitted within the specified transmission interval. If information of more than one bit is required, a new MAC control element may be optionally defined to indicate the information. The specific MAC control element and the specific LCID may be set in a similar manner. Details are not described herein again.

Step 203. The UE sends data to the base station according to the actual uplink-radio-resource usage.

After sending the first indication information to the base station, the UE may send data to the base station according to the actual radio-resource usage indicated by the first indication information.

For example, when the first indication information is used to indicate that there is uplink data transmitted within a specified transmission interval, the UE sends uplink data to the base station within the specified transmission interval. For another example, when the first indication information is used to indicate that there is no uplink data transmitted within a specified transmission interval, the UE does not send uplink data to the base station within the specified transmission interval. If the UE needs to send uplink data, the UE may select another transmission interval, to send uplink data to the base station.

In this aspect, UE receives configuration information from a base station, where the configuration information is used to configure a radio resource that can be used when the UE performs data transmission with the base station. The UE sends first indication information to the base station, where the first indication information is used to indicate actual uplink-radio-resource usage when the UE sends data to the base station. The UE sends data to the base station according to the actual uplink-radio-resource usage. By means of this aspect, a quantity of scheduling signaling can be reduced, radio resource overheads caused by scheduling signaling can be reduced, and a waste of uplink radio resources can be avoided.

The UE may indicate actual uplink-radio-resource usage to the base station, and the base station may indicate actual downlink-radio-resource usage to the UE

Referring to FIG. 3, FIG. 3 is a schematic flowchart of an aspect of a fixed scheduling method according to the present application. The scheduling method may be performed by UE. As shown in FIG. 3, after step 201, the method may further include the following steps.

Step 204. The UE receives second indication information from the base station, where the second indication information is used to indicate actual downlink-radio-resource usage.

The UE receives a MAC data packet that is from the base station and that includes the second indication information. Alternatively, the UE receives the second indication information that is from the base station by using a physical control channel. An information form, a sending manner, and the like of the second indication information are similar to those of first indication information. For specific content, refer to related content of the first indication information. Details are not described herein again.

Step 205. The UE receives, according to the actual downlink-radio-resource usage, data from the base station.

After obtaining the second indication information, the UE may determine actual downlink-radio-resource usage according to the second indication information, and then receive, according to the actual downlink-radio-resource usage, data from the base station.

When the second indication information is used to indicate that there is downlink data transmitted within a specified transmission interval, the UE may consider that there is downlink data senty by the base station at the specified transmission interval. When the second indication information is used to indicate that there is no downlink data transmitted within a specified transmission interval, the UE may consider that there is no downlink data from the base station within the specified transmission interval. For example, when a value of a specified bit in a specific sub-header in the received MAC data packet is 1, the UE may consider that there is downlink data from the base station within the specified transmission interval. When the value of the specified bit in the specific sub-header in the received MAC data packet is 0, the UE may consider that there is no downlink data from the base station within the specified transmission interval.

If it is stipulated in advance that the base station sends the second indication information to the UE only when the actual radio-resource usage changes, the UE may determine the actual downlink-radio-resource usage according to a sending time of the second indication information.

If there is downlink data to be sent within the current transmission interval, and the UE receives the second indication information from the base station to the UE, it indicates that the base station has no downlink data to be sent within a subsequent transmission interval. If there is downlink data to be sent within the current transmission interval, and the UE does not receive the second indication information, it indicates that the base station still has downlink data to be sent within a subsequent transmission interval.

Similarly, if there is no downlink data to be sent within the current transmission interval, and the UE receives the second indication information, it indicates that there is downlink data to be sent within a subsequent transmission interval. If there is no downlink data to be sent within the current transmission interval, and the UE does not receive the second indication information, it indicates that there is still no downlink data to be sent within a subsequent transmission interval.

For example, if there is downlink data to be sent within the current transmission interval, and the UE receives indication information from the base station, it indicates that there is no downlink data to be sent within a subsequent transmission interval. If there is no downlink data to be sent within the current transmission interval, and the UE receives indication information from the base station, it indicates that there is downlink data to be sent within a subsequent transmission interval.

In this aspect, UE receives configuration information from a base station, where the configuration information is used to configure a radio resource that can be used when the UE performs data transmission with the base station. The UE receives second indication information from the base station. The UE receives, according to the actual downlink-radio-resource usage, data from the base station. The actual downlink-radio-resource usage is determined by the UE according to the second indication information. By means of this aspect, the UE may receive, according to the actual downlink-radio-resource usage indicated by the second indication information, downlink data from the base station. In this way, a quantity of scheduling signaling can be reduced, radio resource overheads caused by scheduling signaling can be reduced, and a waste of downlink radio resources can be avoided.

There may be multiple radio bearers between the UE and the base station. Therefore, the base station may configure different radio resources or data transmission modes for different radio bearers. Correspondingly, the UE may complete data transmission on a specified bearer according to the configuration information from the base station.

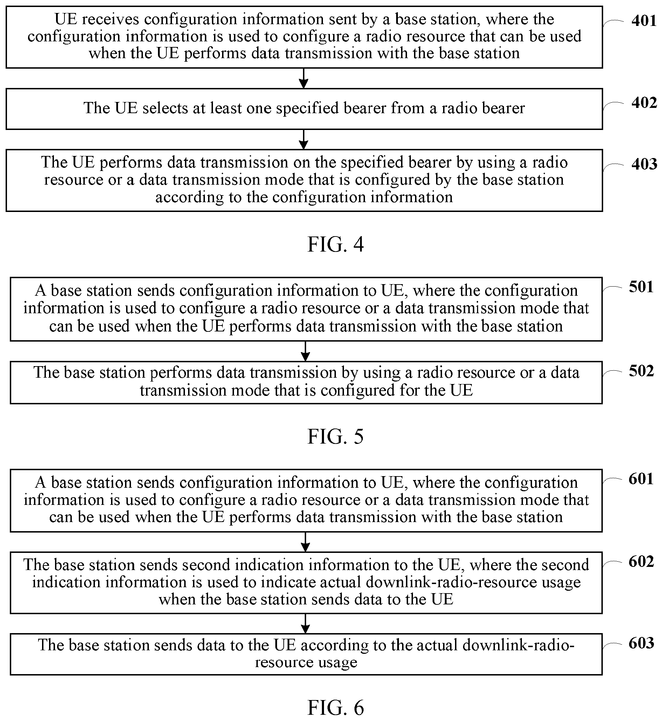

Referring to FIG. 4, FIG. 4 is a schematic flowchart of another aspect of a fixed scheduling method according to the present application.

Step 401. UE receives configuration information from a base station, where the configuration information is used to configure a radio resource that can be used when the UE performs data transmission with the base station.

Step 402. The UE selects at least one specified bearer from the radio bearer.

After receiving the configuration information, the UE randomly selects one specified bearer. The specified bearer may be any one or more of radio bearers between the UE and the base station, or one or more radio bearers, stipulated by the UE and the base station, of radio bearers between the UE and the base station.

Step 403. The UE performs data transmission on the specified bearer by using a radio resource or a data transmission mode that is configured by the base station according to the configuration information.

According to different uses of the configuration information, the UE may perform data transmission on the specified bearer by using different resources.

If the configuration information is used to configure a radio resource, after determining the specified bearer, the UE may perform data transmission on the specified bearer by using some or all radio resources configured by the base station.

If the configuration information is used to configure a data transmission mode, the UE may perform data transmission on the specified bearer by using a data transmission mode configured by the base station. For example, when the data transmission mode is a fixed scheduling and transmission mode, the UE may perform data transmission on the specified bearer by using the fixed scheduling and transmission mode.

In actual use, when some or all of radio resources configured by the base station according to the configuration information are allocated to a specified bearer, or data transmission on the specified bearer is performed in a data transmission mode configured by the base station, an uplink radio resource allocated to the specified bearer may exceed a radio resource actually required by to-be-sent data.

To prevent the radio resource from being occupied by another radio bearer, when the uplink radio resource allocated to the specified bearer exceeds the radio resource actually required by the to-be-sent data, the UE may send the to-be-sent data within a current transmission interval by using a padding manner. In the padding manner, the to-be-sent data and padding data are used to occupy the uplink radio resource allocated to the specified bearer. The to-be-sent data is uplink data of a service corresponding to the specified bearer within the current transmission interval. In this way, the uplink radio resource allocated by the UE to the specified bearer is prevented from being occupied by a non-specified bearer.

When the uplink radio resource allocated to the specified bearer exceeds the radio resource actually required by the to-be-sent data, the UE reuses data of the non-specified bearer within the current transmission interval and sends the data, to fully use the uplink radio resource. Therefore, the uplink radio resource allocated by the UE to the specified bearer can be fully used.

When reusing the data of the non-specified bearer and sending the data, the UE may further start an implicit resource release timer. The UE restarts the timer if before the timer times out, the UE reuses the uplink radio resource allocated to the specified bearer to send uplink data of an application corresponding to the specified bearer. If the timer times out, the UE releases the uplink radio resource allocated to the specified bearer. In this way, the uplink radio resource allocated by the UE to the specified bearer is prevented from being occupied by the non-specified bearer.

The UE may send third indication information to the base station if there is no to-be-sent uplink data of a service corresponding to the specified bearer within the current transmission interval. The third indication information is used to notify the base station that the UE does not use the uplink radio resource allocated to the specified bearer to perform uplink data transmission within the current transmission interval. After sending the third indication information, the UE may further start a resource release timer, and after the timer times out, release the uplink radio resource allocated to the specified bearer, thereby avoiding a waste of radio resources.

In this aspect, UE receives configuration information from a base station, where the configuration information is used to configure a radio resource that can be used when the UE performs data transmission with the base station. The UE selects at least one specified bearer from the radio bearer. The UE performs data transmission on the specified bearer by using a radio resource or a data transmission mode that is configured by the base station according to the configuration information. By means of this aspect, a waste of a radio resource allocated to a specified bearer can be avoided while radio resource overheads caused by scheduling signaling are reduced.

Corresponding to the fixed scheduling method on a side of UE, an aspect of the present application further provides a fixed scheduling method on a side of a base station.

Referring to FIG. 5, FIG. 5 is a schematic flowchart of an aspect of a fixed scheduling method according to the present application. The scheduling method may be performed by a base station.

Step 501. The base station sends configuration information to UE, where the configuration information is used to configure a radio resource or a data transmission mode that can be used when the UE performs data transmission with the base station.

For content included in the configuration information and a function of the configuration information, refer to other aspects in this application document. Details are not described herein again.

Step 502. The base station performs data transmission by using a radio resource or a data transmission mode that is configured for the UE.

For a manner in which the base station performs data transmission by using a radio resource or a data transmission mode that is configured for the UE, refer to other aspects in this application document. Details are not described herein again.

In this aspect, a base station sends configuration information to UE, where the configuration information is used to configure a radio resource or a data transmission mode that can be used when the UE performs data transmission with the base station. The base station performs data transmission by using a radio resource or a data transmission mode that is configured for the UE. By means of this aspect, a waste of a radio resource allocated to a specified bearer can be avoided while radio resource overheads caused by scheduling signaling are reduced.

The following further describes a fixed scheduling method of the present application.

Referring to FIG. 6, FIG. 6 is a schematic flowchart of an aspect of a fixed scheduling method according to the present application. The scheduling method may be performed by a base station.

Step 601. The base station sends configuration information to UE, where the configuration information is used to configure a radio resource or a data transmission mode that can be used when the UE performs data transmission with the base station.

Step 602. The base station sends second indication information to the UE, where the second indication information is used to indicate actual downlink-radio-resource usage when the base station sends data to the UE.

The base station first determines, according to to-be-sent downlink data, actual downlink-radio-resource usage when the base station sends data to the UE, and then sends second indication information to the UE, so that the UE can determine the actual downlink-radio-resource usage according to a sending time of the second indication information or content of the second indication information.

According to different actual situations, the base station sends second indication information to the UE in multiple manners.

The base station may send the second indication information to the UE once every N transmission intervals, to indicate whether there is downlink data to be transmitted within subsequent N transmission intervals. To further reduce radio resources consumed for sending the second indication, the base station may send, according to a preset rule, the second indication information to the UE only when actual radio-resource usage changes. A value of N may be determined according to a requirement, and usually may be a positive integer greater than 1.

If there is downlink data to be sent within a current transmission interval while there is no downlink data to be sent within a subsequent transmission interval, the base station may send the second indication information. If there is downlink data to be sent within a current transmission interval and there is still downlink data to be sent within a subsequent transmission interval, the base station may not send the second indication information.

Similarly, if there is no downlink data to be sent within a current transmission interval while there is downlink data to be sent within a subsequent transmission interval, the base station may send the second indication information. If there is no downlink data to be sent within a current transmission interval and there is still no downlink data to be sent within a subsequent transmission interval, the base station may not send the second indication information.

The second indication information may be in various forms, and there may be various corresponding sending manners.

The second indication information may be from the base station to the UE by using a physical control channel. A resource and a format, for example, a subcarrier, a symbol location, a coding scheme, and the like that are used for a control channel may be stipulated in advance by the base station and the UE, or may be configured by the base station for the UE by using an RRC message.

When there is data transmitted between the base station and the UE within the current transmission interval, the base station may send, during downlink data transmission, a MAC data packet that includes the second indication information to the UE. For example, a separately defined and specific MAC control element, a specified bit in a specific sub-header, or a specific LCID may be used as the second indication information.

A length of the second indication information is at least one bit. When the second indication information includes only one bit, it may be stipulated in advance that if a value of the bit is 0, it indicates that the base station has data to be sent within next N transmission intervals. If the value of the bit is 1, it indicates that the base station has no data to be sent within next N transmission intervals. Alternatively, it may be stipulated that if the bit exists, it indicates that there is data to be sent within next N transmission intervals. If the bit does not exist, it indicates that there is no data to be sent within next N transmission intervals.

When the second indication information includes only one bit, it may be stipulated that if a value of the bit is 0, it indicates that actual radio-resource usage of the base station within next N transmission intervals is the same as actual radio-resource usage within the current transmission interval. If the value of the bit is 1, it indicates that actual radio-resource usage of the base station within next N transmission intervals is different from actual radio-resource usage within the current transmission interval. Alternatively, it may be stipulated that if the bit exists, it indicates that actual radio-resource usage within a next transmission interval is the same as actual radio-resource usage within the current transmission interval. If the bit does not exist, it indicates that actual radio-resource usage within a next transmission interval is different from actual radio-resource usage within the current transmission interval.

When the second indication information includes M bits, one bit may be used to indicate whether there is data to be sent within next N transmission intervals, and the remaining M-1 bits are used to indicate whether there is or there is no data to be sent within M-1 subsequent transmission intervals. Alternatively, the remaining M-1 bits may be used to indicate whether there is or there is no data to be sent within a subsequent (M―1)th transmission interval.

For example, it may be stipulated in advance that when the value of the bit in the sub-header is 1, it indicates that there is downlink data to be transmitted within a specified transmission interval. When the value of the bit in the sub-header is 0, it indicates that there is no data to be transmitted within the specified transmission interval. Alternatively, it may be stipulated in advance that when the value of the bit in the sub-header is 1, it indicates that a data transmission status within a specified transmission interval is the same as a data transmission status within the current transmission interval, that is, there is or there is no data to be transmitted within both the transmission intervals. When the value of the bit in the specific sub-header is 0, it indicates that a data transmission status within the specified transmission interval is different from a data transmission status within the current transmission interval. That is, if there is no data to be transmitted within the current transmission interval, there is data to be transmitted within the specified transmission interval. If there is data to be transmitted within the current transmission interval, there is no data to be transmitted within the specified transmission interval. The specific MAC control element and the specific LCID may be set in a similar manner. Details are not described herein again.

Step 603. The base station sends data to the UE according to the actual downlink-radio-resource usage.

After sending the second indication information to the UE, the base station may send data to the UE according to the actual radio-resource usage indicated by the second indication information.

For example, when the second indication information is used to indicate that there is downlink data to be transmitted within a specified transmission interval, the base station sends downlink data to the UE within the specified transmission interval. For another example, when the second indication information is used to indicate that there is no downlink data transmitted within a specified transmission interval, the base station does not send downlink data to the UE within the specified transmission interval. If after sending the second indication information, the base station needs to send downlink data, the base station may select another transmission interval, to send downlink data to the UE.

A base station sends configuration information to UE, where the configuration information is used to configure a radio resource or a data transmission mode that can be used when the UE performs data transmission with the base station. The base station sends second indication information to the UE, where the second indication information is used to indicate actual downlink-radio-resource usage when the base station sends data to the UE. The base station sends data to the UE according to the actual downlink-radio-resource usage. By means of this aspect, a quantity of scheduling signaling can be reduced, radio resource overheads caused by scheduling signaling can be reduced, and a waste of radio resources can be avoided.

Corresponding to downlink data transmission, the base station may indicate actual uplink-radio-resource usage to the UE.

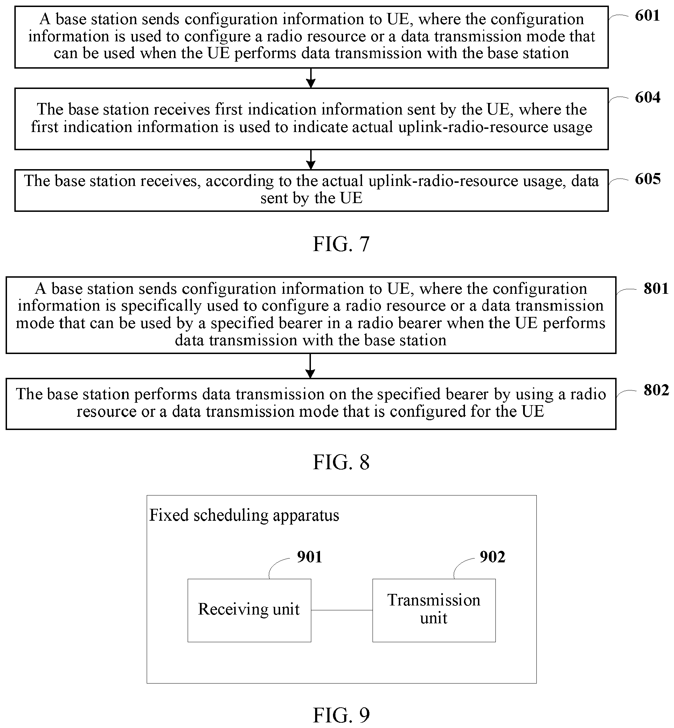

Referring to FIG. 7, FIG. 7 is a schematic flowchart of an aspect of a fixed scheduling method according to the present application. The scheduling method may be performed by a base station. As shown in FIG. 7, after step 601, the method may further include the following steps.

Step 604. The base station receives first indication information from the UE, where the first indication information is used to indicate actual uplink-radio-resource usage.

For content and a sending manner of the first indication information, refer to the foregoing aspect. Details are not described herein again.

Step 605. The base station receives, according to the actual uplink-radio-resource usage, data from the UE.

After obtaining the first indication information, the base station may determine actual uplink-radio-resource usage according to first indication information, and then receive, according to the actual uplink-radio-resource usage, data from the UE.

When the first indication information is used to indicate that there is uplink data transmitted within a specified transmission interval, the base station may consider that there is uplink data from the UE at the specified transmission interval. When the first indication information is used to indicate that there is no uplink data transmitted within a specified transmission interval, the base station may consider that there is no uplink data from the UE within the specified transmission interval. For example, when a value of a specified bit in a specific sub-header in the received MAC data packet is 1, the base station may consider that there is uplink data from the UE within the specified transmission interval. When the value of the specified bit in the specific sub-header in the received MAC data packet is 0, the base station may consider that there is no uplink data from the UE within the specified transmission interval.

If it is stipulated in advance that the UE sends the first indication information to the base station only when the actual radio-resource usage changes, the base station may determine the actual uplink-radio-resource usage according to a sending time of the first indication information. If there is uplink data to be sent within the current transmission interval, and the base station receives the first indication information from the UE to the base station, it indicates that the UE has no uplink data to be sent within a subsequent transmission interval. If there is uplink data to be sent within the current transmission interval, and the base station does not receive the first indication information, it indicates that the UE still has uplink data to be sent within a subsequent transmission interval. If there is no uplink data to be sent within the current transmission interval, and the base station receives the first indication information, it indicates that there is uplink data to be sent within a subsequent transmission interval. If there is no uplink data to be sent within the current transmission interval, and the base station does not receive the first indication information, it indicates that there is still no uplink data to be sent within a subsequent transmission interval.

For example, if there is uplink data to be sent within the current transmission interval, and the base station receives an SR from the UE, it indicates that there is no uplink data to be sent within a subsequent transmission interval. If there is no uplink data to be sent within the current transmission interval, and the base station receives an SR from the UE, it indicates that there is uplink data to be sent within a subsequent transmission interval.

In this aspect, a base station sends configuration information to UE, where the configuration information is used to configure a radio resource or a data transmission mode that can be used when the UE performs data transmission with the base station. The base station sends second indication information to the UE, where the second indication information is used to indicate actual downlink-radio-resource usage when the base station sends data to the UE. The base station sends data to the UE according to the actual downlink-radio-resource usage.

There may be multiple radio bearers between the UE and the base station. Therefore, the base station may configure different radio resources or data transmission modes for different radio bearers. Correspondingly, the UE may complete data transmission on a specified bearer according to the configuration information from the base station. By means of this aspect, a quantity of scheduling signaling can be reduced, radio resource overheads caused by scheduling signaling can be reduced, and a waste of radio resources can be avoided.

Referring to FIG. 8, FIG. 8 is a schematic flowchart of another aspect of a fixed scheduling method according to the present application.

Step 801. Abase station sends configuration information to UE, where the configuration information is used to configure a radio resource or a data transmission mode that can be used by a specified bearer in a radio bearer when the UE performs data transmission with the base station.

There may be one or more specified bearers. When there are multiple specified bearers, the configuration information may be used to separately configure a data transmission mode or a radio resource combination for each specified bearer. Further, when a data transmission mode for the specified bearer is being configured, the configuration information may further be used to configure a period for data transmission using a fixed scheduling and transmission mode. When a radio resource that can be used during data transmission is being configured, the configuration information may further be used to configure a service period of the radio resource.

For example, when the specified bearer includes an RB 1, an RB 2, and an RB 3, according to the configuration information, the base station may: configure, for the RB 1, a fixed scheduling mode with a period of 1 ms; configure, for the RB 2, a fixed scheduling mode with a period of 10 ms; and directly specify, for the RB 3, a time-frequency resource, a modulation and coding scheme (MCS) that corresponds to the time-frequency resource, and a service period of the radio resource.

Step 802. The base station performs data transmission on the specified bearer by using a radio resource or a data transmission mode that is configured for the UE.

When the configuration information is used to configure a data transmission mode that can be used when the UE performs data transmission with the base station, the UE may perform data transmission according to a radio resource combination that is subsequently scheduled by the base station by using a physical channel. The physical channel may be a PDCCH or the like.

For example, the base station may first configure a fixed scheduling and transmission mode for the UE by using the configuration information, and may further configure a period and an effective time of the fixed scheduling and transmission mode when configuring the fixed scheduling and transmission mode. Then the base station further schedules, by using the PDCCH, a radio resource combination that can be used when the UE performs data transmission with the base station by using the fixed scheduling and transmission mode. The radio resource combination may include a time-frequency resource and a corresponding modulation and coding scheme.

According to different data transmission requirements, the UE may use different manners to send uplink data by using the specified bearer. Correspondingly, the base station may use corresponding receiving manners to receive the uplink data from the UE.

Optionally, when the UE sends to-be-sent data within a current transmission interval by using a padding manner, the base station receives the to-be-sent data from using the padding manner by the UE within the current transmission interval. In the padding manner, the to-be-sent data and padding data are used to occupy an uplink radio resource allocated to the specified bearer. The to-be-sent data is uplink data of a service corresponding to the specified bearer within the current transmission interval.

The UE may send third indication information when there is no uplink data to be sent on the bearer. Therefore, after step 802, the method may further include: receiving, by the base station, the third indication information that is from the UE when there is no to-be-sent uplink data of a service corresponding to the specified bearer within a current transmission interval. The third indication information is used to notify the base station that the UE does not use the uplink radio resource allocated to the specified bearer to perform uplink data transmission within the current transmission interval.

In this aspect, a base station sends configuration information to UE, where the configuration information is used to configure a radio resource or a data transmission mode that can be used by a specified bearer in a radio bearer when the UE performs data transmission with the base station. The base station performs data transmission on the specified bearer by using a radio resource or a data transmission mode that is configured for the UE. By means of this aspect, a quantity of scheduling signaling can be reduced, radio resource overheads caused by scheduling signaling can be reduced, and a waste of radio resources can be avoided.

Referring to FIG. 9, FIG. 9 is a schematic structural diagram of an aspect of a fixed scheduling apparatus according to the present application. The apparatus may be disposed on UE and configured to perform the fixed scheduling method in the foregoing aspects.

As shown in FIG. 9, the apparatus includes a receiving unit 901 and a transmission unit 902.

The receiving unit 901 is configured to receive configuration information from a base station, where the configuration information is used to configure a radio resource or a data transmission mode that can be used when the UE performs data transmission with the base station. The transmission unit 902 is configured to perform data transmission by using a radio resource or a data transmission mode that is configured by the base station according to the configuration information.

The configuration information is used to configure a fixed scheduling and transmission mode; or used to configure at least one radio resource combination that can be used when the UE performs data transmission with the base station. The radio resource combination is a combination of a radio resource and a modulation and coding scheme that corresponds to data transmitted by using the radio resource. The radio resource is a time domain resource or a frequency domain resource used for data transmission using a fixed scheduling and transmission mode.

When the configuration information is used to configure a data transmission mode that can be used when the UE performs data transmission with the base station, the configuration information is further used to configure a period for data transmission using the fixed scheduling and transmission mode. Alternatively, when the configuration information is used to configure a radio resource that can be used when the UE performs data transmission with the base station, the configuration information is further used to configure a service period of the radio resource.

In an aspect, optionally, the apparatus may further include an obtaining unit, configured to: when the configuration information is used to configure a fixed scheduling and transmission mode, obtain, by using a physical downlink control channel, a radio resource required for uplink data transmission and/or downlink data transmission and a modulation and coding scheme that corresponds to a data block.

Optionally, the transmission unit 902 is configured to: when the configuration information is used to configure at least one radio resource combination that can be used when the UE performs data transmission with the base station, perform data transmission with the base station by using a selected radio resource combination, where the selected radio resource combination is one of the at least one radio resource combination that can be used.

Optionally, the apparatus may further include a sending unit, configured to send first indication information to the base station before data transmission is performed by using the radio resource or the data transmission mode that is configured by the base station according to the configuration information, where the first indication information is used to indicate actual uplink-radio-resource usage when the UE sends data to the base station. The transmission unit 902 is configured to send data to the base station according to the actual uplink-radio-resource usage.

Optionally, the receiving unit 901 is further configured to: before data transmission is performed by using the radio resource or the data transmission mode that is configured by the base station according to the configuration information, receive second indication information from the base station, where the second indication information is used to indicate actual downlink-radio-resource usage. The transmission unit 902 is configured to receive, according to the actual downlink-radio-resource usage, data from the base station.

In another aspect, optionally, the apparatus further includes a selection unit, configured to: when there is at least one radio bearer between the UE and the base station, select at least one specified bearer from the at least one radio bearer. The transmission unit 902 is configured to perform data transmission on the specified bearer by using the radio resource or the data transmission mode that is configured by the base station according to the configuration information.

Optionally, the transmission unit 902 is configured to: when there is at least one radio bearer between the UE and the base station, perform data transmission on the specified bearer by using the radio resource or the data transmission mode that is configured by the base station according to the configuration information, where the specified bearer is at least one radio bearer, indicated by the base station, of the at least one radio bearer between the UE and the base station.

Optionally, the transmission unit 902 includes: a transmission subunit, configured to: when an uplink radio resource allocated to the specified bearer exceeds a radio resource actually required by to-be-sent data, reuse data of a non-specified bearer within a current transmission interval, send the data, and start an implicit resource release timer; a restart subunit, configured to restart the timer if before the timer times out, the UE reuses the uplink radio resource allocated to the specified bearer to send uplink data of an application corresponding to the specified bearer; and a release subunit, configured to: if the timer times out, release the uplink radio resource allocated to the specified bearer.

Optionally, the apparatus further includes an indication unit, configured to send third indication information to the base station if there is no to-be-sent uplink data of a service corresponding to the specified bearer within the current transmission interval, where the third indication information is used to notify the base station that the UE does not use the uplink radio resource allocated to the specified bearer to perform uplink data transmission within the current transmission interval.

It can be learned from the foregoing aspect that, UE uses the apparatus provided in this aspect to perform data transmission, so that a quantity of scheduling signaling can be reduced, radio resource overheads caused by scheduling signaling can be reduced, and a waste of radio resources can be avoided.

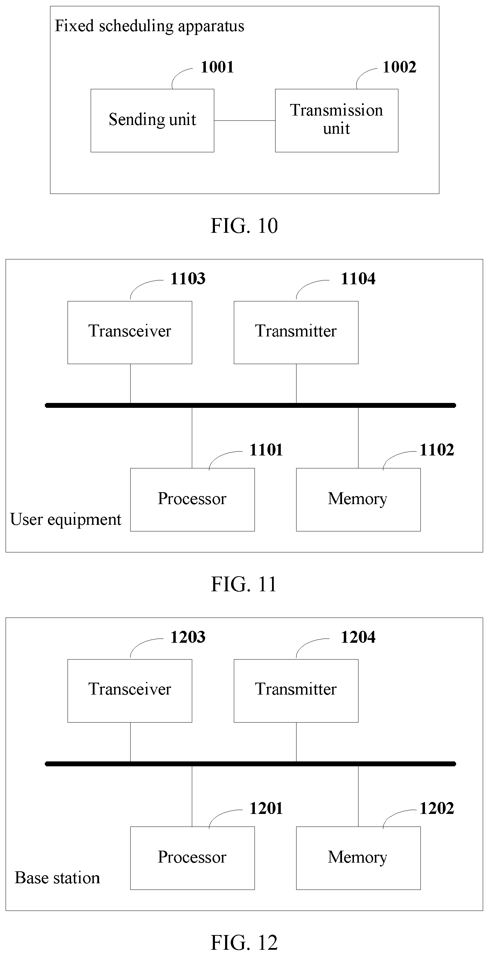

Referring to FIG. 10, FIG. 10 is a schematic structural diagram of another aspect of a fixed scheduling apparatus according to the present application. The apparatus may be disposed on a base station and configured to perform the fixed scheduling method in the foregoing aspects.

As shown in FIG. 10, the apparatus includes a sending unit 1001 and a transmission unit 1002.

The sending unit 1001 is configured to send configuration information to user equipment (UE), where the configuration information is used to configure a radio resource or a data transmission mode that can be used when the UE performs data transmission with the base station. The transmission unit 1002 is configured to perform data transmission by using a radio resource or a data transmission mode that is configured for the UE.

The configuration information is used to configure a fixed scheduling and transmission mode; or used to configure at least one radio resource combination that can be used when the UE performs data transmission with the base station. The radio resource combination is a combination of a radio resource and a modulation and coding scheme that corresponds to data transmitted by using the radio resource, and the radio resource is a time domain resource or a frequency domain resource for fixed scheduling and transmission.

When the configuration information is used to configure a data transmission mode that can be used when the UE performs data transmission with the base station, the configuration information is further used to configure a period for data transmission using the fixed scheduling and transmission mode. Alternatively, when the configuration information is used to configure a radio resource that can be used when the UE performs data transmission with the base station, the configuration information is further used to configure a service period of the radio resource.

In another aspect, optionally, the sending unit 1001 is further configured to: when the configuration information is used to configure a fixed scheduling and transmission mode, indicate, to the UE by using a physical downlink control channel, a radio resource required for uplink data transmission and/or downlink data transmission and a modulation and coding scheme that corresponds to a data block transmitted by using the radio resource.

Optionally, the transmission unit 1002 is configured to perform data transmission with the UE by using a selected radio resource combination, where the selected radio resource combination is one of multiple radio resource combinations that can be used.

In another aspect, optionally, the apparatus further includes an indication unit, configured to send second indication information to the UE before data transmission is performed by using the radio resource or the data transmission mode that is configured for the UE, where the second indication information is used to indicate actual downlink-radio-resource usage. The transmission unit 1002 is configured to send data to the UE according to the actual downlink-radio-resource usage.

Optionally, the apparatus further includes a first receiving unit, configured to: before data transmission is performed by using the radio resource or the data transmission mode that is configured for the UE, receive first indication information from the UE, where the first indication information is used to indicate actual uplink-radio-resource usage. The transmission unit 1002 is configured to receive, according to the actual uplink-radio-resource usage, data from the UE.

In another aspect, optionally, the configuration unit is configured to: when there is at least one radio bearer between the UE and the base station, configure a radio resource or a data transmission mode that can be used by at least one specified bearer in the radio bearer. The transmission unit 1002 is configured to perform data transmission on the specified bearer by using the radio resource or the data transmission mode that is configured for the UE.

Optionally, the sending unit 1001 is configured to send the configuration information to the UE, where the configuration information is used to indicate a specified bearer and a radio resource or a data transmission mode that can be used by the specified bearer.

Optionally, the apparatus further includes a second receiving unit, configured to receive third indication information that is from the UE when there is no to-be-sent uplink data of a service corresponding to the specified bearer within a current transmission interval, where the third indication information is used to notify the base station that the UE does not use the uplink radio resource allocated to the specified bearer to perform uplink data transmission within the current transmission interval.

It can be learned from the foregoing aspect that, a base station uses the apparatus provided in this aspect to perform data transmission, so that a quantity of scheduling signaling can be reduced, radio resource overheads caused by scheduling signaling can be reduced, and a waste of radio resources can be avoided.

Referring to FIG. 11, FIG. 11 is a schematic structural diagram of an aspect of user equipment (UE) according to the present application. The UE is configured to perform the fixed scheduling method in the foregoing aspects.

As shown in FIG. 11, the user equipment includes: a processor 1101, a memory 1102, a transceiver 1103, and a transmitter 1104. These components perform communication by using one or more buses. A person skilled in the art may understand that the structure of a terminal shown in the figure does not constitute a limitation to the present application and may be a bus-form structure or a star-form structure, and the terminal may further include more components or fewer components than those shown in the figure, or some components may be combined, or a different component deployment may be used.

The processor 1101 is a control center of the terminal, uses various interfaces and lines to connect various parts of the entire terminal, and executes various functions of the terminal and/or processes data by running or executing software programs and/or modules stored in the memory 1102 and invoking data stored in the memory 1102. The processor 1101 may include an integrated circuit (IC), for example, may include a single packaged IC, or may include multiple connected packaged ICs that have same functions or different functions. For example, the processor 1101 may include only a central processing unit (CPU), or may be a combination of a GPU, a digital signal processor (DSP), and a control chip (such as a baseband chip) in a communications unit. In an implementation of the present application, the CPU may be a single computing core or may include multiple computing cores.

The memory 1102 may be configured to store a software program and module, and the processor 1101 runs the software program and module that are stored in the memory 1102, so as to perform various function applications of the terminal and implement data processing. The memory 1102 mainly includes a program storage area and a data storage area. The program storage area may store an operating system, an application program required by at least one function, such as a sound playing program and an image playing program. The data storage area may store data (such as audio data and an address book) created according to use of the terminal and the like. In this implementation of the present application, the memory 1102 may include a volatile memory, such as a nonvolatile random access memory (NVRAM), a phase change random access memory (PRAM), or a magnetoresistive random access memory (MRAM), or may include a nonvolatile memory, such as at least one magnetic storage device, an electrically erasable programmable read-only memory (EEPROM), or a flash memory, for example, a NOR flash memory or a NAND flash memory. The nonvolatile memory stores an operating system and an application program that are executed by the processor 1101. The processor 1101 loads a running program and data from the nonvolatile memory to a memory, and saves digital content in a large-scale storage apparatus. The operating system is used for control and management of routine system tasks, such as memory management, storage device control, and power management, and various components and/or drivers that facilitate communication between various types of software and hardware. In this implementation of the present application, the operating system may be the Android system of the Google company, the iOS system developed by the Apple company, or the Windows operating system developed by the Microsoft company, or may be a built-in operating system such as Vxworks.

In different implementations of the present application, various communications modules in the transceiver 1103 usually appear in a form of integrated circuit chips, the various communications modules may be selectively combined, and the transceiver 1103 does not necessarily include all the communications modules and corresponding antenna groups. For example, the transceiver 1103 may include only a baseband chip, a radio frequency chip, and a corresponding antenna, so as to provide a communication function in a cellular communications system. The terminal may be connected to a cellular network or the Internet by using a wireless communications connection, for example, wireless local area network access or WCDMA access, established by the transceiver 1103. In some optional implementations of the present application, a communications module, for example, the baseband module, in the transceiver 1103 may be integrated into the processor 1101, typically, for example, APQ+MDM series platforms.

Similarly, various communications modules in the transmitter 1104 usually appear in a form of integrated circuit chips, the various communications modules may be selectively combined, and the transmitter 1104 does not necessarily include all the communications modules and corresponding antenna groups. For example, the transmitter 1104 may include only a baseband chip, a radio frequency chip, and a corresponding antenna, so as to provide a communication function in a cellular communications system. In this aspect of the present application, the transceiver 1103 and the transmitter 1104 may reuse same hardware. For example, the transceiver 1103 and the transmitter 1104 may be implemented by using a same integrated circuit chip.

In this implementation of the present application, the transceiver 1103 is configured to receive configuration information from a base station, where the configuration information is used to configure a radio resource or a data transmission mode that can be used when the UE performs data transmission with the base station. The transmitter 1104 is configured to perform data transmission by using a radio resource or a data transmission mode that is configured by the base station according to the configuration information. For content included in the configuration information, refer to the foregoing aspect. Details are not described herein again.

Optionally, the transceiver 1103 is further configured to: after receiving the configuration information from the base station, obtain, by using a physical downlink control channel, a radio resource required for uplink data transmission and/or downlink data transmission and a modulation and coding scheme that corresponds to a data block.

Optionally, the transmitter 1104 is configured to: when the configuration information is used to configure at least one radio resource combination that can be used when the UE performs data transmission with the base station, perform data transmission with the base station by using a selected radio resource combination. The selected radio resource combination is one of the at least one radio resource combination that can be used.

In another implementation, optionally, the transceiver 1103 is further configured to send first indication information to the base station, where the first indication information is used to indicate actual uplink-radio-resource usage when the UE sends data to the base station. The transmitter 1104 is further configured to send data to the base station according to the actual uplink-radio-resource usage.

Optionally, the transceiver 1103 is further configured to receive second indication information from the base station, where the second indication information is used to indicate actual downlink-radio-resource usage. The transmitter 1104 is further configured to receive, according to the actual downlink-radio-resource usage, data from the base station.

In another implementation, optionally, the transmitter 1104 is further configured to: when there is at least one radio bearer between the UE and the base station, select at least one specified bearer from the at least one radio bearer; and perform data transmission on the specified bearer by using the radio resource or the data transmission mode that is configured by the base station according to the configuration information.

Optionally, the transmitter 1104 is further configured to perform data transmission on the specified bearer by using the radio resource or the data transmission mode that is configured by the base station according to the configuration information. The specified bearer is at least one radio bearer, indicated by the base station, of the at least one radio bearer between the UE and the base station.

Optionally, the transmitter 1104 is further configured to: when an uplink radio resource allocated to the specified bearer exceeds a radio resource actually required by to-be-sent data, reuse data of a non-specified bearer within a current transmission interval, send the data, and start an implicit resource release timer; and restart the timer if before the timer times out, the UE reuses the uplink radio resource allocated to the specified bearer to send uplink data of an application corresponding to the specified bearer; or if the timer times out, release, by the UE, the uplink radio resource allocated to the specified bearer.

Optionally, the transceiver 1103 is further configured to send third indication information to the base station if there is no to-be-sent uplink data of a service corresponding to the specified bearer within the current transmission interval, where the third indication information is used to notify the base station that the UE does not use the uplink radio resource allocated to the specified bearer to perform uplink data transmission within the current transmission interval.

In this aspect, the UE may receive configuration information from a base station, where the configuration information is used to configure a radio resource or a data transmission mode that can be used when the UE performs data transmission with the base station; and perform data transmission by using a radio resource or a data transmission mode that is configured by the base station according to the configuration information. Therefore, it can be learned that, during data transmission, the UE provided in this aspect can reduce a quantity of scheduling signaling, reduce radio resource overheads caused by scheduling signaling, and avoid a waste of radio resources.

Referring to FIG. 12, FIG. 12 is a schematic structural diagram of an aspect of a base station according to the present application. The base station is configured to perform the fixed scheduling method in the foregoing aspects.

As shown in FIG. 12, the base station may include: a processor 1201, a memory 1202, a transceiver 1203, and a transmitter 1204.

The processor 1201 is a control center of the terminal, uses various interfaces and lines to connect various parts of the entire terminal, and executes various functions of the terminal and/or processes data by running or executing software programs and/or modules stored in the memory 1202 and invoking data stored in the memory 1202. The processor 1201 may include an integrated circuit (IC), for example, may include a single packaged IC, or may include multiple connected packaged ICs that have same functions or different functions. For example, the processor 1201 may include only a central processing unit (CPU), or may be a combination of a GPU, a digital signal processor (DSP), and a control chip (such as a baseband chip) in a communications unit. In an implementation of the present application, the CPU may be a single computing core or may include multiple computing cores.

The memory 1202 may be configured to store a software program and module, and the processor 1201 runs the software program and module that are stored in the memory 1202, so as to perform various function applications of the terminal and implement data processing. The memory 1202 mainly includes a program storage area and a data storage area. In this implementation of the present application, the memory 1202 may include a volatile memory, such as a nonvolatile random access memory (NVRAM), a phase change random access memory (PRAM), or a magnetoresistive random access memory (MRAM), or may include a nonvolatile memory, such as at least one magnetic storage device, an electrically erasable programmable read-only memory (EEPROM), or a flash memory, for example, a NOR flash memory or a NAND flash memory. The nonvolatile memory stores an operating system and an application program that are executed by the processor 1201. The processor 1201 loads a running program and data from the nonvolatile memory to a memory, and saves digital content in a large-scale storage apparatus. The operating system is used for control and management of routine system tasks, such as memory management, storage device control, and power management, and various components and/or drivers that facilitate communication between various types of software and hardware.

In different implementations of the present application, various communications modules in the transceiver 1203 and the transmitter 1204 usually appear in a form of integrated circuit chips, the various communications modules may be selectively combined, and the transceiver 1203 and the transmitter 1204 do not necessarily include all the communications modules and corresponding antenna groups. In this aspect of the present application, the transceiver 1203 and the transmitter 1204 may reuse same hardware. For example, the transceiver 1203 and the transmitter 1204 may be implemented by using a same integrated circuit chip.

In this implementation of the present application, the transceiver 1203 is configured to send configuration information to UE, where the configuration information is used to configure a radio resource or a data transmission mode that can be used when the UE performs data transmission with the base station. The transmitter 1204 is configured to perform data transmission by using a radio resource or a data transmission mode that is configured for the UE. For content that may be included in the configuration information and a function of the configuration information, refer to the foregoing aspect. Details are not described herein again.

Optionally, the transceiver 1203 is further configured to: when the configuration information is used to configure a fixed scheduling and transmission mode, indicate, to the UE by using a physical downlink control channel, a radio resource required for uplink data transmission and/or downlink data transmission and a modulation and coding scheme that corresponds to a data block transmitted by using the radio resource.

Optionally, the transmitter 1204 is configured to: when the configuration information is used to configure at least one radio resource combination that can be used when the UE performs data transmission with the base station, perform data transmission with the UE by using a selected radio resource combination, where the selected radio resource combination is one of multiple radio resource combinations that can be used.

Optionally, the transceiver 1203 is further configured to send second indication information to the UE, where the second indication information is used to indicate actual downlink-radio-resource usage, where the transmitter 1204 is further configured to send data to the UE according to the actual downlink-radio-resource usage.

Optionally, the transceiver 1203 is further configured to receive first indication information from the UE, where the first indication information is used to indicate actual uplink-radio-resource usage. The transmitter 1204 is further configured to receive, according to the actual uplink-radio-resource usage, data from the UE.

In another implementation, optionally, the transceiver 1203 is configured to send the configuration information to the UE, where the configuration information is used to configure a radio resource or a data transmission mode that can be used by a specified bearer in a radio bearer when the UE performs data transmission with the base station. The transmitter 1204 is configured to perform data transmission on the specified bearer by using the radio resource or the data transmission mode that is configured for the UE.

Optionally, the transceiver 1203 is configured to send the configuration information to the UE, where the configuration information is used to indicate a specified bearer and a radio resource or a data transmission mode that can be used by the specified bearer.

Optionally, the transceiver 1203 is further configured to receive third indication information that is from the UE when there is no to-be-sent uplink data of a service corresponding to the specified bearer within a current transmission interval, where the third indication information is used to notify the base station that the UE does not use an uplink radio resource allocated to the specified bearer to perform uplink data transmission within the current transmission interval.

In an implementation, an aspect of the present application further provides a computer storage medium, where the computer storage medium may store a program, and, when the program is executed, a part or all of the steps of the aspects of the calling method provided in the present application may be performed. The storage medium may be a magnetic disk, an optical disc, a read-only memory (ROM), a random access memory (RAM), or the like.

A person skilled in the art may clearly understand that, the technologies in the aspects of the present application may be implemented by software in addition to a necessary general hardware platform. Based on such an understanding, the technical solutions of the present application essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the aspects or some parts of the aspects of the present application.

The aspects in this specification are all described in a progressive manner, for same or similar parts in the aspects, reference may be made to these aspects, and each aspect focuses on a difference from other aspects. Especially, apparatus and system aspects are basically similar to a method aspect, and therefore are described briefly; for related parts, reference may be made to partial descriptions in the method aspect.
The scope of protection shall be defined by the appended claims.

The aspects in this specification are all described in a progressive manner, for same or similar parts in the aspects, reference may be made to these aspects, and each aspect focuses on a difference from other aspects. Especially, apparatus and system aspects are basically similar to a method aspect, and therefore are described briefly; for related parts, reference may be made to partial descriptions in the method aspect.

## Claims

1. A user equipment, UE, comprising a transceiver (1103) and a transmitter (1104), wherein
the transceiver (1103) is configured to receive configuration information from a base station, wherein the configuration information is used to configure a radio resource or a data transmission mode that can be used when the transmitter (1104) performs data transmission with the base station; and
the transmitter (1104) is configured to transmit data to the base station by using the radio resource or the data transmission mode that is configured by the base station according to the configuration information;
**characterized in that**,
when the configuration information is used to configure the radio resource, the configuration information is used to configure the radio resource to be a time domain resource or a frequency domain resource used for data transmission using a fixed scheduling and transmission mode and further, the configured information is used to configure at least one radio resource combination that can be used when the UE performs data transmission with the base station, wherein the radio resource combination is a combination of the radio resource and a modulation and coding scheme that corresponds to data transmitted by using the radio resource, and the configuration information is further used to configure a service period of the radio resource; or
when the configuration information is used to configure the data transmission mode, the configuration information is used to configure the data transmission mode to be a fixed scheduling and transmission mode; and after the receiving, by the UE, the configuration information from the base station, the method further comprises: obtaining, by the UE by using a physical downlink control channel, at least one radio resource combination, wherein the radio resource combination is a combination of a radio resource and a modulation and coding scheme that corresponds to data transmitted by using the radio resource; and the configuration information is further used to configure a period for data transmission using the fixed scheduling and transmission mode.

2. The UE according to claim 1, wherein
the transmitter is configured to: when the configuration information is used to configure at least one radio resource combination that can be used when the transmitter transmits the data to the base station, transmit the data to the base station by using a selected radio resource combination, wherein the selected radio resource combination is one of the at least one radio resource combination that can be used.

3. The UE according to claim 1 or 2, wherein
the transceiver (1103) is further configured to send a first indication information to the base station, wherein the first indication information is used to indicate actual uplink-radio-resource usage when the transmitter sends the data to the base station; and
the transmitter (1104) is further configured to send the data to the base station according to the actual uplink-radio-resource usage.

4. The UE according to any one of claims 1 to 3, wherein
the transceiver (1103) is further configured to receive a second indication information from the base station, wherein the second indication information is used to indicate actual downlink-radio-resource usage; and
the transceiver (1103) is further configured to receive, according to the actual downlink-radio-resource usage, data from the base station.

5. The UE according to claim 1, wherein
the transmitter (1104) is further configured to: when there is at least one radio bearer between the UE and the base station, select at least one specified bearer from the at least one radio bearer; and transmit the data to the base station on the specified bearer by using the radio resource or the data transmission mode that is configured by the base station according to the configuration information.

6. The UE according to claim 1, wherein
the transmitter (1104) is configured to transmit the data to the base station on a specified bearer by using the radio resource or the data transmission mode that is configured by the base station according to the configuration information, wherein the specified bearer is at least one radio bearer, indicated by the base station, of the at least one radio bearer between the UE and the base station.

7. The UE according to claim 5 or 6, wherein
the transmitter (1104) is further configured to: when an uplink radio resource allocated to the specified bearer exceeds a radio resource actually required by to-be-sent data, reuse data of a non-specified bearer within a current transmission interval, send the data, and start an implicit resource release timer; and restart the timer if before the timer times out and the transmitter reuses the uplink radio resource allocated to the specified bearer to send uplink data of an application corresponding to the specified bearer; or if the timer times out, release the uplink radio resource allocated to the specified bearer.

8. The UE according to claim 7, wherein
the transceiver (1103) is further configured to send a third indication information to the base station if there is no to-be-sent uplink data of a service corresponding to the specified bearer within the current transmission interval, wherein the third indication information is used to notify the base station that the transmitter (1104) does not use the uplink radio resource allocated to the specified bearer to perform uplink data transmission within the current transmission interval.

9. Abase station, **characterized in** comprising:
a transceiver (1203), configured to send configuration information to a user equipment, UE, according to any one of claims 1 to 8, wherein the configuration information is used to configure a radio resource or a data transmission mode that can be used when the UE performs data transmission with the base station; and
a transmitter (1204), configured to transmit the data to the UE by using the radio resource or the data transmission mode that is configured for the UE;
**characterized in that**,
when the configuration information is used to configure the radio resource, the configuration information is used to configure the radio resource to be a time domain resource or a frequency domain resource used for data transmission using a fixed scheduling and transmission mode and further, the configured information is used to configure at least one radio resource combination that can be used when the UE performs data transmission with the base station, wherein the radio resource combination is a combination of a radio resource and a modulation and coding scheme that corresponds to data transmitted by using the radio resource, and the configuration information is further used to configure a service period of the radio resource; or
when the configuration information is used to configure the data transmission mode, the configuration information is used to configure the data transmission mode to be a fixed scheduling and transmission mode; and after the receiving, by the UE, the configuration information from the base station, the method further comprises: obtaining, by the UE by using a physical downlink control channel, at least one radio resource combination, wherein the radio resource combination is a combination of a radio resource and a modulation and coding scheme that corresponds to data transmitted by using the radio resource; and the configuration information is further used to configure a period for data transmission using the fixed scheduling and transmission mode.

10. The base station according to claim 9, wherein
the transmitter (1204) is configured to: when the configuration information is used to configure at least one radio resource combination that can be used when the UE performs data transmission with the base station, transmit the data to the UE by using a selected radio resource combination, wherein the selected radio resource combination is one of the at least one radio resource combinations that can be used.

11. The base station according to claim 9 to 10, wherein
the transceiver (1203) is further configured to send a second indication information to the UE. wherein the second indication information is used to indicate actual downlink-radio-resource usage; and
the transmitter (1204) is further configured to send data to the UE according to the actual downlink-radio-resource usage.

12. The base station according to any one of claims 9 to 11, wherein
the transceiver (1203) is further configured to receive a first indication information from the UE. wherein the first indication information is used to indicate actual uplink-radio-resource usage; and
the transceiver (1203) is further configured to receive, according to the actual uplink-radio-resource usage, data from the UE.

13. The base station according to claim 9, wherein
the transceiver (1203) is configured to send the configuration information to the UE, wherein the configuration information is used to configure a radio resource or a data transmission mode that can be used by a specified bearer in a radio bearer when the UE performs data transmission with the base station; and
the transmitter (1204) is configured to transmit the data to the UE on the specified bearer by using the radio resource or the data transmission mode that is configured for the UE.

14. The base station according to claim 9, wherein
the transceiver (1203) is configured to send the configuration information to the UE, wherein the configuration information is used to indicate the specified bearer and a radio resource or a data transmission mode that can be used by the specified bearer.

15. The base station according to claim 14, wherein
the transceiver is further configured to receive a third indication that is from the UE when there is no to-be-sent uplink data of a service corresponding to the specified bearer within a current transmission interval, wherein the third indication is used to notify the base station that the UE does not use an uplink radio resource allocated to the specified bearer to perform uplink data transmission within the current transmission interval.

## Patentansprüche

1. Benutzergerät UE, das einen Sendeempfänger (1103) und einen Sender (1104) umfasst, wobei
der Sendeempfänger (1103) ausgelegt ist zum Empfangen von Konfigurationsinformationen von einer Basisstation, wobei die Konfigurationsinformationen verwendet werden, um eine Funkressource oder einen Datenübertragungsmodus zu konfigurieren, die bzw. der verwendet werden kann, wenn der Sender (1104) Datenübertragung mit der Basisstation durchführt; und
der Sender (1104) ausgelegt ist zum Senden von Daten zu der Basisstation durch Verwendung der Funkressource oder des Datenübertragungsmodus, die bzw. der durch die Basisstation konfiguriert ist, gemäß den Konfigurationsinformationen;
**dadurch gekennzeichnet, dass**
wenn die Konfigurationsinformationen zum Konfigurieren der Funkressource verwendet werden, die Konfigurationsinformationen verwendet werden, um die Funkressource als eine Zeitbereichsressource oder eine Frequenzbereichsressource zu konfigurieren, die für Datenübertragung unter Verwendung eines Festeinteilungs- und -übertragungsmodus verwendet wird, und die konfigurierten Informationen ferner verwendet werden, um mindestens eine Funkressourcenkombination zu konfigurieren, die verwendet werden kann, wenn das UE Datenübertragung mit der Basisstation durchführt, wobei die Funkressourcenkombination eine Kombination der Funkressource und eines Modulations- und Codierungsschemas ist, das durch Verwendung der Funkressource gesendeten Daten entspricht, und die Konfigurationsinformationen ferner verwendet werden, um einen Dienstzeitraum der Funkressource zu konfigurieren; oder
wenn die Konfigurationsinformationen zum Konfigurieren des Datenübertragungsmodus verwendet werden, die Konfigurationsinformationen verwendet werden, um den Datenübertragungsmodus als Festeinteilungs- und -übertragungsmodus zu konfigurieren; und das Verfahren nach dem Empfangen der Konfigurationsinformationen von der Basisstation durch das UE ferner Folgendes umfasst: Erhalten mindestens einer Funkressourcenkombination durch das UE durch Verwendung eines physischen Abwärtsstreckensteuerkanals, wobei die Funkressourcenkombination eine Kombination einer Funkressource und eines Modulations- und Codierungsschemas ist, das durch Verwendung der Funkressource gesendeten Daten entspricht; und die Konfigurationsinformationen ferner verwendet werden, um einen Zeitraum für Datenübertragung unter Verwendung des Festeinteilungs- und -übertragungsmodus zu konfigurieren.

2. UE nach Anspruch 1, wobei
der Sender für Folgendes ausgelegt ist: wenn die Konfigurationsinformationen verwendet werden, um mindestens eine Funkressourcenkombination zu konfigurieren, die verwendet werden kann, wenn der Sender die Daten zu der Basisstation sendet, Senden der Daten zu der Basisstation durch Verwendung einer ausgewählten Funkressourcenkombination, wobei die ausgewählte Funkressourcenkombination eine der mindestens einen Funkressourcenkombination ist, die verwendet werden kann.

3. UE nach Anspruch 1 oder 2, wobei
der Sendeempfänger (1103) ferner ausgelegt ist zum Senden einer ersten Angabeinformation zu der Basisstation, wobei die erste Angabeinformation verwendet wird, um tatsächliche Aufwärtsstrecken-Funkressourcenauslastung anzugeben, wenn der Sender die Daten zur Basisstation sendet; und
der Sender (1104) ferner ausgelegt ist zum Senden der Daten zur Basisstation gemäß der tatsächlichen Aufwärtsstrecken-Funkressourcenauslastung.

4. UE nach einem der Ansprüche 1 bis 3, wobei
der Sendeempfänger (1103) ferner ausgelegt ist zum Empfangen einer zweiten Angabeinformation von der Basisstation, wobei die zweite Angabeinformation verwendet wird, um tatsächliche Abwärtsstrecken-Funkressourcenauslastung anzugeben;und
der Sendeempfänger (1103) ferner ausgelegt ist zum Empfangen von Daten von der Basisstation gemäß der tatsächlichen Abwärtsstrecken-Funkressourcenauslastung.

5. UE nach Anspruch 1, wobei
der Sender (1104) ferner für Folgendes ausgelegt ist: wenn es mindestens einen Funkträger zwischen dem UE und der Basisstation gibt, Auswählen mindestens eines vorgegebenen Trägers aus dem mindestens einen Funkträger; und
Senden der Daten zur Basisstation auf dem vorgegebenen Träger durch Verwendung der Funkressource oder des Datenübertragungsmodus, die bzw. der durch die Basisstation konfiguriert ist, gemäß den Konfigurationsinformationen.

6. UE nach Anspruch 1, wobei
der Sender (1104) ausgelegt ist zum Senden der Daten zur Basisstation auf einem vorgegebenen Träger durch Verwendung der Funkressource oder des Datenübertragungsmodus, die bzw. der durch die Basisstation konfiguriert ist, gemäß den Konfigurationsinformationen, wobei der vorgegebene Träger mindestens ein durch die Basisstation angegebener Funkträger des mindestens einen Funkträgers zwischen dem UE und der Basisstation ist.

7. UE nach Anspruch 5 oder 6, wobei
der Sender (1104) ferner für Folgendes ausgelegt ist: wenn eine dem vorgegebenen Träger zugeteilte Aufwärtsstrecken-Funkressource eine tatsächlich von zu sendenden Daten benötigte Funkressource überschreitet, Wiederverwenden von Daten eines nichtvorgegebenen Trägers innerhalb eines aktuellen Übertragungsintervalls, Senden der Daten und Starten eines Implizit-Ressource-Freigabe-Timers; und Neustarten des Timers, wenn bevor der Timer abläuft und der Sender die dem vorgegebenen Träger zugeteilte Aufwärtsstrecken-Funkressource zum Senden von Aufwärtsstreckendaten einer dem vorgegebenen Träger entsprechenden Anwendung wiederverwendet; oder wenn der Timer abläuft, Freigeben der dem vorgegebenen Träger zugeteilten Aufwärtsstrecken-Funkressource.

8. UE nach Anspruch 7, wobei
der Sendeempfänger (1103) ferner ausgelegt ist zum Senden einer dritten Angabeinformation zur Basisstation, wenn es innerhalb des aktuellen Übertragungsintervalls keine zu sendenden Aufwärtsstreckendaten eines dem vorgegebenen Träger entsprechenden Dienstes gibt, wobei die dritte Angabeinformation verwendet wird, um die Basisstation zu benachrichtigen, dass der Sender (1104) die dem vorgegebenen Träger zugeteilte Aufwärtsstrecken-Funkressource nicht zum Durchführen von Aufwärtsstrecken-Datenübertragung innerhalb des aktuellen Übertragungsintervalls verwendet.

9. Basisstation, **dadurch gekennzeichnet, dass** sie Folgendes umfasst:
einen Sendeempfänger (1203), ausgelegt zum Senden von Konfigurationsinformationen zu einem Benutzergerät UE nach einem der Ansprüche 1 bis 8, wobei die Konfigurationsinformationen verwendet werden, um eine Funkressource oder einen Datenübertragungsmodus zu konfigurieren, die bzw. der verwendet werden kann, wenn das UE Datenübertragung mit der Basisstation durchführt; und
einen Sender (1204), ausgelegt zum Senden der Daten zum UE durch Verwendung der Funkressource oder des Datenübertragungsmodus, die bzw. der für das UE konfiguriert ist;
**dadurch gekennzeichnet, dass**
wenn die Konfigurationsinformationen zum Konfigurieren der Funkressource verwendet werden, die Konfigurationsinformationen verwendet werden, um die Funkressource als eine Zeitbereichsressource oder eine Frequenzbereichsressource zu konfigurieren, die für Datenübertragung unter Verwendung eines Festeinteilungs- und -übertragungsmodus verwendet wird, und die konfigurierten Informationen ferner verwendet werden, um mindestens eine Funkressourcenkombination zu konfigurieren, die verwendet werden kann, wenn das UE Datenübertragung mit der Basisstation durchführt, wobei die Funkressourcenkombination eine Kombination der Funkressource und eines Modulations- und Codierungsschemas ist, das durch Verwendung der Funkressource gesendeten Daten entspricht, und die Konfigurationsinformationen ferner verwendet werden, um einen Dienstzeitraum der Funkressource zu konfigurieren; oder
wenn die Konfigurationsinformationen zum Konfigurieren des Datenübertragungsmodus verwendet werden, die Konfigurationsinformationen verwendet werden, um den Datenübertragungsmodus als Festeinteilungs- und -übertragungsmodus zu konfigurieren; und das Verfahren nach dem Empfangen der Konfigurationsinformationen von der Basisstation durch das UE ferner Folgendes umfasst: Erhalten mindestens einer Funkressourcenkombination durch das UE durch Verwendung eines physischen Abwärtsstreckensteuerkanals, wobei die Funkressourcenkombination eine Kombination einer Funkressource und eines Modulations- und Codierungsschemas ist, das durch Verwendung der Funkressource gesendeten Daten entspricht; und die Konfigurationsinformationen ferner verwendet werden, um einen Zeitraum für Datenübertragung unter Verwendung des Festeinteilungs- und -übertragungsmodus zu konfigurieren.

10. Basisstation nach Anspruch 9, wobei
der Sender (1204) für Folgendes ausgelegt ist: wenn die Konfigurationsinformationen verwendet werden, um mindestens eine Funkressourcenkombination zu konfigurieren, die verwendet werden kann, wenn das UE Datenübertragung mit der Basisstation durchführt, Senden der Daten zum UE durch Verwendung einer ausgewählten Funkressourcenkombination, wobei die ausgewählte Funkressourcenkombination eine der mindestens einen Funkressourcenkombination ist, die verwendet werden kann.

11. Basisstation nach Anspruch 9 oder 10, wobei
der Sendeempfänger (1203) ferner ausgelegt ist zum Senden einer zweiten Angabeinformation zum UE, wobei die zweite Angabeinformation verwendet wird, um tatsächliche Abwärtsstrecken-Funkressourcenauslastung anzugeben; und
der Sender (1204) ferner ausgelegt ist zum Senden von Daten zum UE gemäß der tatsächlichen Abwärtsstrecken-Funkressourcenauslastung.

12. Basisstation nach einem der Ansprüche 9 bis 11, wobei
der Sendeempfänger (1203) ferner ausgelegt ist zum Empfangen einer ersten Angabeinformation vom UE, wobei die erste Angabeinformation verwendet wird, um tatsächliche Aufwärtsstrecken-Funkressourcenauslastung anzugeben; und
der Sendeempfänger (1203) ferner ausgelegt ist zum Empfangen von Daten von dem UE gemäß der tatsächlichen Aufwärtsstrecken-Funkressourcenauslastung.

13. Basisstation nach Anspruch 9, wobei
der Sendeempfänger (1203) ausgelegt ist zum Senden der Konfigurationsinformationen zum UE, wobei die Konfigurationsinformationen verwendet werden, um eine Funkressource oder einen Datenübertragungsmodus zu konfigurieren, die bzw. der von einem vorgegebenen Träger in einem Funkträger verwendet werden kann, wenn das UE Datenübertragung mit der Basisstation durchführt; und
der Sender (1204) ausgelegt ist zum Senden der Daten zum UE auf dem vorgegebenen Träger durch Verwendung der Funkressource oder des Datenübertragungsmodus, die bzw. der für das UE konfiguriert ist.

14. Basisstation nach Anspruch 9, wobei
der Sendeempfänger (1203) ausgelegt ist zum Senden der Konfigurationsinformationen zum UE, wobei die Konfigurationsinformationen verwendet werden, um den vorgegebenen Träger und eine Funkressource oder einen Datenübertragungsmodus anzugeben, der durch den vorgegebenen Träger verwendet werden kann.

15. Basisstation nach Anspruch 14, wobei
der Sendeempfänger ferner ausgelegt ist zum Empfangen einer dritten Angabe, die vom UE kommt, wenn es innerhalb eines aktuellen Übertragungsintervalls keine zu sendenden Aufwärtsstreckendaten eines dem vorgegebenen Träger entsprechenden Dienstes gibt, wobei die dritte Angabe verwendet wird, um die Basisstation zu benachrichtigen, dass das UE eine dem vorgegebenen Träger zugeteilte Aufwärtsstrecken-Funkressource nicht zum Durchführen von Aufwärtsstrecken-Datenübertragung innerhalb des aktuellen Übertragungsintervalls verwendet.

## Revendications

1. Équipement d'utilisateur (UE), comprenant un émetteur-récepteur (1103) et un émetteur (1104),
l'émetteur-récepteur (1103) étant configuré pour recevoir une information de configuration en provenance d'une station de base, l'information de configuration étant utilisée pour configurer une ressource radio ou un mode d'émission de données qui peut être utilisé quand l'émetteur (1104) réalise une émission de données avec la station de base ; et
l'émetteur (1104) étant configuré pour émettre des données vers la station de base au moyen de la ressource radio ou du mode d'émission de données qui est configuré par la station de base selon l'information de configuration ;
l'UE étant **caractérisé en ce que** :
quand l'information de configuration est utilisée pour configurer la ressource radio, l'information de configuration est utilisée pour configurer la ressource radio de façon qu'elle soit une ressource dans le domaine temporel ou une ressource dans le domaine fréquentiel utilisée pour une émission de données au moyen d'un mode de planification et d'émission fixe et, en outre, l'information de configuration est utilisée pour configurer au moins une combinaison de ressources radio qui peut être utilisée quand l'UE réalise une émission de données avec la station de base, la combinaison de ressources radio étant une combinaison de la ressource radio et d'un schéma de modulation et de codage qui correspond aux données émises au moyen de la ressource radio, et l'information de configuration est en outre utilisée pour configurer une période de service de la ressource radio ; ou
quand l'information de configuration est utilisée pour configurer le mode d'émission de données, l'information de configuration est utilisée pour configurer le mode d'émission de données pour qu'il soit un mode de planification et d'émission fixe ; et
le procédé comprenant en outre, après la réception, par l'UE, de l'information de configuration en provenance de la station de base, l'étape consistant à : obtenir, par l'UE au moyen d'un canal physique de commande en liaison descendante, au moins une combinaison de ressources radio, la combinaison de ressources radio étant une combinaison d'une ressource radio et d'un schéma de modulation et de codage qui correspond à des données émises au moyen de la ressource radio ; et l'information de configuration est en outre utilisée pour configurer une période d'émission de données au moyen du mode de planification et d'émission fixe.

2. UE selon la revendication 1, dans lequel :
l'émetteur est configuré pour : quand l'information de configuration est utilisée pour configurer au moins une combinaison de ressources radio qui peut être utilisée quand l'émetteur émet les données vers la station de base, émettre les données vers la station de base au moyen d'une combinaison de ressources radio sélectionnée, la combinaison de ressources radio sélectionnée étant une de l'au moins une combinaison de ressources radio qui peut être utilisée.

3. UE selon la revendication 1 ou 2, dans lequel :
l'émetteur-récepteur (1103) est en outre configuré pour envoyer une première information d'indication à la station de base, la première information d'indication étant utilisée pour indiquer une utilisation réelle de ressource radio en liaison montante quand l'émetteur envoie les données à la station de base ; et
l'émetteur (1104) est en outre configuré pour envoyer les données à la station de base selon l'utilisation réelle de ressource radio en liaison montante.

4. UE selon l'une quelconque des revendications 1 à 3, dans lequel :
l'émetteur-récepteur (1103) est en outre configuré pour recevoir une deuxième information d'indication en provenance de la station de base, la deuxième information d'indication étant utilisée pour indiquer une utilisation réelle de ressource radio en liaison descendante ; et
l'émetteur-récepteur (1103) est en outre configuré pour recevoir, selon l'utilisation réelle de ressource radio en liaison descendante, des données en provenance de la station de base.

5. UE selon la revendication 1, dans lequel :
l'émetteur (1104) est en outre configuré pour : quand il y a au moins une porteuse radio entre l'UE et la station de base, sélectionner au moins une porteuse spécifiée parmi l'au moins une porteuse radio ; et émettre les données vers la station de base sur la porteuse spécifiée au moyen de la ressource radio ou du mode d'émission de données qui est configuré par la station de base selon l'information de configuration.

6. UE selon la revendication 1, dans lequel :
l'émetteur (1104) est configuré pour émettre les données vers la station de base sur une porteuse spécifiée au moyen de la ressource radio ou du mode d'émission de données qui est configuré par la station de base selon l'information de configuration, la porteuse spécifiée étant au moins une porteuse radio, indiquée par la station de base, de l'au moins une porteuse radio entre l'UE et la station de base.

7. UE selon la revendication 5 ou 6, dans lequel :
l'émetteur (1104) est en outre configuré pour : quand une ressource radio en liaison montante affectée à la porteuse spécifiée dépasse une ressource radio effectivement requise par les données à envoyer, réutiliser des données d'une porteuse non spécifiée dans un intervalle d'émission en cours, envoyer les données et démarrer un temporisateur de libération implicite de ressource ; et redémarrer le temporisateur si, avant que le temporisateur n'expire et l'émetteur réutilise la ressource radio en liaison montante affectée à la porteuse spécifiée pour envoyer des données en liaison montante d'une application qui correspond à la porteuse spécifiée ; ou si le temporisateur expire, libérer la ressource radio en liaison montante affectée à la porteuse spécifiée.

8. UE selon la revendication 7, dans lequel :
l'émetteur-récepteur (1103) est en outre configuré pour envoyer une troisième information d'indication à la station de base s'il n'y a pas de données en liaison montante à envoyer d'un service qui correspond à la porteuse spécifiée dans l'intervalle d'émission en cours, la troisième information d'indication étant utilisée pour notifier à la station de base que l'émetteur (1104) n'utilise pas la ressource radio en liaison montante affectée à la porteuse spécifiée pour réaliser une émission de données en liaison montante dans l'intervalle d'émission en cours.

9. Station de base, **caractérisée en ce qu'**elle comprend :
un émetteur-récepteur (1203), configuré pour envoyer une information de configuration à un équipement d'utilisateur (UE) selon l'une quelconque des revendications 1 à 8, l'information de configuration étant utilisée pour configurer une ressource radio ou un mode d'émission de données qui peut être utilisé quand l'UE réalise une émission de données avec la station de base ; et
un émetteur (1204), configuré pour émettre les données vers l'UE au moyen de la ressource radio ou du mode d'émission de données qui est configuré pour l'UE ;
la station de base étant **caractérisée en ce que** :
quand l'information de configuration est utilisée pour configurer la ressource radio, l'information de configuration est utilisée pour configurer la ressource radio de façon qu'elle soit une ressource dans le domaine temporel ou une ressource dans le domaine fréquentiel utilisée pour une émission de données au moyen d'un mode de planification et d'émission fixe et, en outre, l'information de configuration est utilisée pour configurer au moins une combinaison de ressources radio qui peut être utilisée quand l'UE réalise une émission de données avec la station de base, la combinaison de ressources radio étant une combinaison d'une ressource radio et d'un schéma de modulation et de codage qui correspond aux données émises au moyen de la ressource radio, et l'information de configuration est en outre utilisée pour configurer une période de service de la ressource radio ; ou
quand l'information de configuration est utilisée pour configurer le mode d'émission de données, l'information de configuration est utilisée pour configurer le mode d'émission de données pour qu'il soit un mode de planification et d'émission fixe ; et
le procédé comprenant en outre, après la réception, par l'UE, de l'information de configuration en provenance de la station de base, l'étape consistant à : obtenir, par l'UE au moyen d'un canal physique de commande en liaison descendante, au moins une combinaison de ressources radio, la combinaison de ressources radio étant une combinaison d'une ressource radio et d'un schéma de modulation et de codage qui correspond à des données émises au moyen de la ressource radio ; et l'information de configuration est en outre utilisée pour configurer une période d'émission de données au moyen du mode de planification et d'émission fixe.

10. Station de base selon la revendication 9, dans laquelle :
l'émetteur (1204) est configuré pour : quand l'information de configuration est utilisée pour configurer au moins une combinaison de ressources radio qui peut être utilisée quand l'UE réalise une émission de données avec la station de base, émettre les données vers l'UE au moyen d'une combinaison de ressources radio sélectionnée, la combinaison de ressources radio sélectionnée étant une de l'au moins une combinaison de ressources radio qui peut être utilisée.

11. Station de base selon les revendications 9 et 10, dans laquelle :
l'émetteur-récepteur (1203) est en outre configuré pour envoyer une deuxième information d'indication à l'UE, la deuxième information d'indication étant utilisée pour indiquer une utilisation réelle de ressource radio en liaison descendante ; et
l'émetteur (1204) est en outre configuré pour envoyer des données à l'UE selon l'utilisation réelle de ressource radio en liaison descendante.

12. Station de base selon l'une quelconque des revendications 9 à 11, dans laquelle :
l'émetteur-récepteur (1203) est en outre configuré pour recevoir une première information d'indication en provenance de l'UE, la première information d'indication étant utilisée pour indiquer une utilisation réelle de ressource radio en liaison montante ; et
l'émetteur-récepteur (1203) est en outre configuré pour recevoir, selon l'utilisation réelle de ressource radio en liaison montante, des données en provenance de l'UE.

13. Station de base selon la revendication 9, dans laquelle :
l'émetteur-récepteur (1203) est configuré pour envoyer l'information de configuration à l'UE, l'information de configuration étant utilisée pour configurer une ressource radio ou un mode d'émission de données qui peut être utilisé par une porteuse spécifiée dans une porteuse radio quand l'UE réalise une émission de données avec la station de base ; et
l'émetteur (1204) est configuré pour émettre les données vers l'UE sur la porteuse spécifiée au moyen de la ressource radio ou du mode d'émission de données qui est configuré pour l'UE.

14. Station de base selon la revendication 9, dans laquelle :
l'émetteur-récepteur (1203) est configuré pour envoyer l'information de configuration à l'UE, l'information de configuration étant utilisée pour indiquer la porteuse spécifiée et une ressource radio ou un mode d'émission de données qui peut être utilisé par la porteuse spécifiée.

15. Station de base selon la revendication 14, dans laquelle :
l'émetteur-récepteur est en outre configuré pour recevoir une troisième indication en provenance de l'UE quand il n'y a pas de données en liaison montante à envoyer d'un service qui correspond à la porteuse spécifiée dans un intervalle d'émission en cours, la troisième indication étant utilisée pour notifier à la station de base que l'UE n'utilise pas une ressource radio en liaison montante affectée à la porteuse spécifiée pour réaliser une émission de données en liaison montante dans l'intervalle d'émission en cours.
